# EUROPÄISCHE PATENTSCHRIFT

(11) **EP 2 313 254 B1**
(45) Veröffentlichungstag und Bekanntmachung des Hinweises auf die Patenterteilung: **03.10.2012**
(21) Anmeldenummer: 09777276.8
(22) Anmeldetag: 17.07.2009
(51) Int. Cl.: B22F 3/105, B29C 35/02, B29C 67/00

(54) **WECHSELRAHMEN FÜR EINE VORRICHTUNG ZUM HERSTELLEN EINES DREIDIMENSIONALEN OBJEKTS UND VORRICHTUNG ZUM HERSTELLEN EINES DREIDIMENSIONALEN OBJEKTS MIT EINEM SOLCHEN WECHSELRAHMEN**
INTERCHANGEABLE FRAME FOR A DEVICE FOR PRODUCING A THREE-DIMENSIONAL OBJECT AND DEVICE HAVING SUCH AN INTERCHANGEABLE FRAME FOR PRODUCING A THREE-DIMENSIONAL OBJECT
STRUCTURE INTERCHANGEABLE DESTINÉE À UN DISPOSITIF DE FABRICATION D'OBJET TRIDIMENSIONNEL ET DISPOSITIF DE FABRICATION D'OBJET TRIDIMENSIONNEL ÉQUIPÉ D'UNE TELLE STRUCTURE INTERCHANGEABLE

(30) Priorität: 13.10.2008 DE 102008051478; 22.10.2008 US 197052 P
(43) Veröffentlichungstag der Anmeldung: 27.04.2011
(73) Patentinhaber: EOS GmbH Electro Optical Systems, 82152 Krailling (DE)
(72) Erfinder: BOKODI, Attila, 80796 München (DE); LEUTERER, Martin, 82140 Olching (DE)
(74) Vertreter: Prüfer & Partner GbR European Patent Attorneys
(86) Internationale Anmeldenummer: PCT/EP2009/005222
(87) Internationale Veröffentlichungsnummer: WO 2010/043280

(56) Entgegenhaltungen:
- GB-A- 2 179 440
- US-A1- 2008 190 905

## Beschreibung

Die vorliegende Erfindung bezieht sich auf einen Wechselrahmen für eine Vorrichtung zum Herstellen eines dreidimensionalen Objekts gemäß dem Oberbegriff von Anspruch 1.

US 2008/0190905 A1 beschreibt eine Vorrichtung zum Herstellen eines dreidimensionalen Objekts durch aufeinander folgendes schichtweises Verfestigen eines verfestigbaren Materials, wobei in einem Bauraum ein Baubehälter vorhanden ist, in den ein Innenbehälter eingefügt ist, der gewechselt werden kann. Insbesondere ist der Bauraum durch die Wände des Innenbehälters und eine Plattform, auf der das Objekt während seiner Herstellung ruht, begrenzt.

US 2008/0190905 A1 offenbart eine Wechselrahmen gemäß dem Oberbegriff des Anspruchs 1.

Ein gattungsgemäßer Wechselrahmen für eine Vorrichtung zum Herstellen eines dreidimensionalen Objekts ist auch in der WO00/21736 A offenbart. Die Vorrichtung stellt das dreidimensionale Objekt durch schichtweises Verfestigen eines pulverförmigen Aufbaumaterials an den dem Querschnitt des herzustellenden Objekts in der jeweiligen Schicht entsprechenden Stellen durch Einwirkung eines Lasers oder einer anderen Energiequelle her. Der Rahmen und die Plattform definieren einen Bauraum, in dem das dreidimensionale Objekt hergestellt wird. Der Rahmen und die Plattform sind als ein Wechselrahmen modular miteinander verbunden, wobei der Wechselrahmen in die Vorrichtung eingebaut und aus dieser entnommen werden kann.

Eine ähnliche Vorrichtung zum Herstellen eines dreidimensionalen Objekts ist aus der DE 199 39 616 A1 bekannt. Bei der Vorrichtung gemäß diesem Stand der Technik wird der Bauraum üblicherweise auf eine Temperatur von 100 bis 150 °C beim Durchführen des Lasersinterprozesses erwärmt.

Ein Problem bei diesen herkömmlichen Vorrichtungen zum Herstellen eines dreidimensionalen Objekts liegt darin, dass eine externe Beheizung des Rahmens auf deutlich höhere Temperaturen bisher nicht möglich ist, da die Umgebung des Rahmens thermisch zu stark belastet werden würde.

Es ist die Aufgabe der vorliegenden Erfindung, einen Rahmen für eine Vorrichtung zum Herstellen eines dreidimensionalen Objekts vorzusehen, der eine Erwärmung des Bauraums auf deutlich höhere Temperaturen zulässt.

Diese Aufgabe wird durch einen Wechselrahmen für die Vorrichtung zum Herstellen eines dreidimensionalen Objekts mit den Merkmalen des Anspruchs 1 und durch eine Vorrichtung mit den Merkmalen des Anspruchs 8 gelöst. Vorteilhafte Weiterbildungen sind Gegenstand der Unteransprüche.

Durch die Verwendung von Glaskeramikplatten und durch die selektive Ansteuerung der erforderlichen Heizzonen sind Prozesstemperaturen bis zu 370 °C möglich. Wenn sich die Plattform zu Baubeginn ganz oben befindet, wird nur der obere Bereich des Rahmens beheizt. Dem Baufortschritt folgend werden weiter unten liegende Heizzonen zugeschaltet. Dadurch wird eine übermäßige thermische Belastung insbesondere der unten befindlichen Hubmechanik vermieden. Auch die Glaskeramikplatten leiten die Wärme nicht zu stark in vertikaler Richtung ab. Dies ist insbesondere bei Baubeginn vorteilhaft, da die Hubmechanik thermisch nicht zu stark belastet wird.

Die Vorrichtung zum Herstellen eines dreidimensionalen Objekts ist besonders als Hochtemperatur-Lasersintermaschine geeignet, mit der Sinterpulver mit einem hohen Schmelzpunkt wie z.B. Polyetheretherketon (PEEK) verarbeitet werden kann.

Weitere Merkmale und Zweckmäßigkeiten der Erfindung ergeben sich aus der Beschreibung eines Ausführungsbeispiels anhand der beigefügten Zeichnungen. Von den Figuren zeigen:
- Fig. 1: eine schematische Ansicht einer Vorrichtung zum Herstellen eines dreidimensionalen Objekts gemäß der vorliegenden Erfindung;
- Fig. 2: eine schematische, horizontale Schnittansicht eines Abschnitts des Rahmens des Wechselrahmens für die Vorrichtung zum Herstellen eines dreidimensionalen Objekts gemäß der vorliegenden Erfindung;
- Fig. 3: eine schematische, vertikale Schnittansicht eines Flächenheizelementes mit zwei Heizzonen für den Rahmen gemäß der vorliegenden Erfindung; und
- Fig. 4: eine schematische, vertikale Schnittansicht eines Flächenheizelementes mit drei Heizzonen für den Rahmen gemäß der vorliegenden Erfindung.

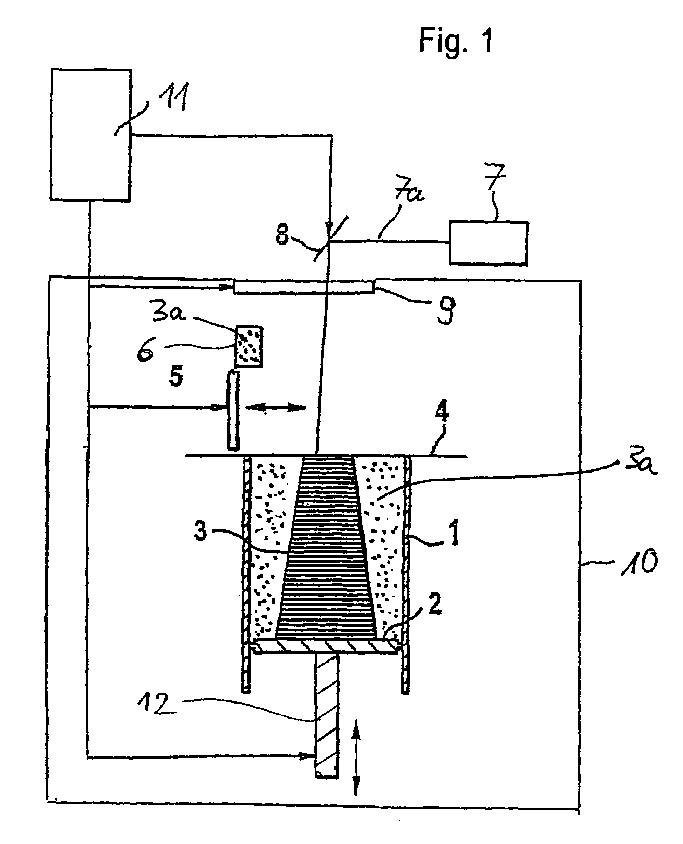

Die Fig. 1 zeigt eine schematische Ansicht einer Vorrichtung zum Herstellen eines dreidimensionalen Objekts 3 gemäß der vorliegenden Erfindung, die im Ausführungsbeispiel als Lasersintervorrichtung ausgebildet ist.

Die Lasersintervorrichtung weist einen nach oben hin offenen Rahmen 1 mit einer darin befindlichen, in vertikaler Richtung bewegbaren Plattform 2 auf, die das herzustellende dreidimensionale Objekt 3 trägt. Der Rahmen 1 und die Plattform 2 definieren im Inneren einen Bauraum. Die Plattform 2 ist mit einer Hubmechanik 12 in Verbindung, die sie in vertikaler Richtung so verfährt, dass die jeweils zu verfestigende Schicht des Objekts 3 in einer Arbeitsebene 4 liegt. Der Rahmen 1 und die Plattform 2 sind als ein Wechselrahmen modular miteinander verbunden. Nach erfolgter Herstellung des dreidimensionalen Objekts 3 kann der Wechselrahmen mit dem darin aufgebauten Objekt 3 aus der Vorrichtung entnommen und durch einen neuen Wechselrahmen ersetzt werden.

Des Weiteren ist ein Beschichter 5 zum Aufbringen einer Schicht eines pulverförmigen Aufbaumaterials 3a vorgesehen. Als Aufbaumaterial 3a können alle lasersinterbaren Pulver verwendet werden, wie z.B. Polyamid, Polystyrol, Metalle, Keramiken, Verbundmaterialien und insbesondere Hochtemperatur-Kunststoffe wie z.B. PEEK. Dem Rahmen 1 wird zunächst das Aufbaumaterial 3a aus einem Vorratsbehälter 6 zugeführt. Der Beschichter 5 wird danach in einer vorbestimmten Höhe in der Arbeitsebene 4 verfahren, so dass die Schicht des pulverförmigen Aufbaumaterials 3a mit einer definierten Höhe über der zuletzt verfestigten Schicht liegt. Die Vorrichtung weist des Weiteren einen Laser 7 auf, der einen Laserstrahl 7a erzeugt, der durch eine Ablenkeinrichtung 8 auf einen vorbestimmten Punkt in der Arbeitsebene 4 fokussiert wird. Dadurch kann der Laserstrahl 7a das pulverförmige Aufbaumaterial 3a an dem Querschnitt des herzustellenden Objekts 3 in der jeweiligen Schicht entsprechenden Stellen selektiv verfestigen.

Mit dem Bezugszeichen 10 ist eine Prozesskammer bezeichnet, in der der Rahmen 1, die Plattform 2, die Hubmechanik 12 und der Beschichter 5 angeordnet werden können. Das Bezugszeichen 9 bezeichnet eine Öffnung in der Prozesskammer 10 zur Einleitung des Laserstrahls 7a. Es ist ferner eine Steuereinheit 11 vorgesehen, über die die Vorrichtung in koordinierter Weise zum Durchführen des Bauprozesses gesteuert wird.

Bei dem Betrieb der Vorrichtung wird in einem ersten Schritt die Plattform 2 durch die Hubmechanik 12 soweit verfahren, bis ihre obere Seite um eine Schichtdicke unterhalb der Arbeitsebene 4 liegt. Dann wird mittels des Vorratsbehälters 6 und des Beschichters 5 eine erste Schicht des Materials 3a auf die Plattform 2 aufgebracht und geglättet. Daraufhin steuert die Steuereinheit 11 die Ablenkeinrichtung 8 derart, dass der abgelenkte Laserstrahl 7a selektiv an den Stellen der Schicht des Materiales 3a auftrifft, die verfestigt werden sollen. Dadurch wird an diesen Stellen das Material 3a verfestigt bzw. gesintert.

In einem nächsten Schritt wird die Plattform 2 durch die Hubmechanik 12 um die Dicke der nächsten Schicht abgesenkt. Durch den Vorratsbehälter 6 und den Beschichter 5 wird eine zweite Materialschicht aufgetragen, geglättet und mittels des Laserstahls 7a selektiv verfestigt. Diese Schritte werden so oft durchgeführt, bis das gewünschte Objekt 3 hergestellt ist.

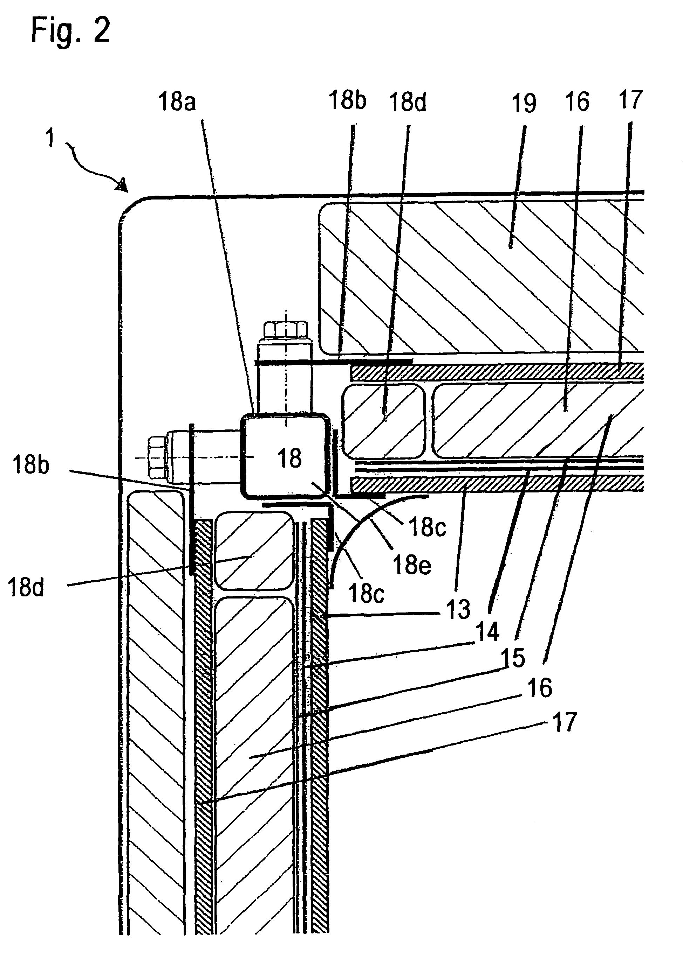

Die Fig. 2 zeigt eine schematische, horizontale Schnittansicht eines Abschnitts des Rahmens 1 des Wechselrahmens der Vorrichtung zum Herstellen eines dreidimensionalen Objekts 3 gemäß der vorliegenden Erfindung.

Der Rahmen 1 hat an seiner dem Bauraum zugewandten Innenseite Glaskeramikplatten 13. Zum Beispiel können Glaskeramikplatten 13 der Fa. Schott AG mit der Bezeichnung Robax (eingetragene Marke) verwendet werden. Im dargestellten Ausführungsbeispiel haben die Glaskeramikplatten 13 eine Wandstärke von etwa 5 mm. Die besonderen Eigenschaften der Glaskeramikplatten 13 sind eine hohe Temperaturbeständigkeit und ein relativ geringer Wärmeausdehnungskoeffizient, wodurch nahezu kein Verzug bei großen Temperaturunterschieden entlang der Platte auftritt. Die Glaskeramikplatten 13 zeigen dadurch keine Defekte wie Zerspringen (wie bei normalen Glas) oder Beulen (wie bei Metallen). Die Glaskeramikplatten 13 haben des Weiteren eine relativ geringe Wärmeleitfähigkeit, so dass insbesondere in der Richtung der Plattenebene kein wesentlicher Wärmetransport erfolgt. Ein Temperaturgradient in der Plattenebene bleibt im wesentlichen bestehen. Des Weiteren haben Glaskeramikplatten 13 eine gute Ebenheit, so dass insbesondere bei einer einteiligen Glaskeramikplatte 13 eine gute Dichtung zwischen dem Rahmen 1 und der Plattform 2 bzw. einer daran angebrachten Dichtlippe erreicht wird. Darüber hinaus ist die Reinigung von Glaskeramikplatten 13 einfach und es entstehen keine Dehnungsspalte, die sich mit Pulver zusetzen könnten.

Der Rahmen 1 hat des Weiteren Flächenheizelemente 14 an einer dem Bauraum abgewandten Außenseite der Glaskeramikplatten 13. Zum Beispiel können Flächenheizelemente 14 der Fa. Freek mit der Bezeichnung Mikanit (Marke) verwendet werden. Im dargestellten Ausführungsbeispiel bestehen die Flächenheizelemente 14 aus Kunstglimmerplatten, die mit flachen Heizdrähten als Ohmsche Heizung umwickelt sind. Die Kunstglimmerplatten sind üblicherweise beidseitig mit Isolator- und Trägerplatten verbunden. Eine direkte Anbringung der der Kunstglimmerplatten an die elektrisch isolierenden Glaskeramikplatten 13 ermöglicht jedoch das Weglassen der inneren Isolator- und Trägerplatte. Dadurch wird eine gute thermische Anbindung der Heizdrähte an die Glaskeramikplatten 13 ermöglicht.

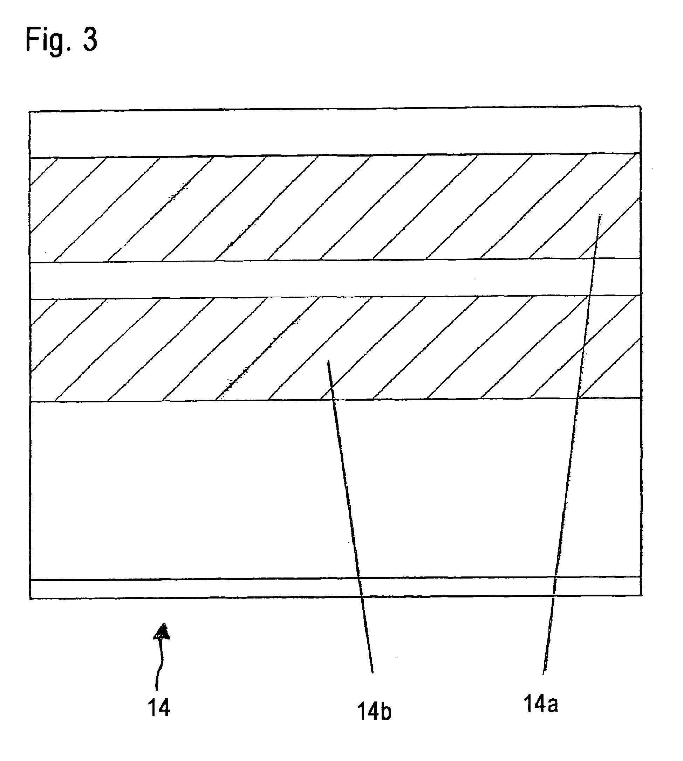

Die Fig. 3 zeigt eine schematische, vertikale Schnittansicht eines Flächenheizelementes 14 mit zwei Heizzonen 14a, 14b für den Rahmen 1 gemäß der vorliegenden Erfindung. Bei dem dargestellten Ausführungsbeispiel definieren die Flächenheizelemente 14 die beiden vertikal übereinander angeordneten Heizzonen 14a, 14b, die individuell ansteuerbar sind. Die Steuervorrichtung 11 steuert entsprechend dem Baufortschritt nur die Heizzone/Heizzonen oberhalb der Plattform 2 an. Derartige Flächenheizelemente 14 erlauben eine einfache Handhabung, da pro Seite des Rahmens 1 nur ein kompaktes Flächenheizelement 14 angebracht werden muss. Des Weiteren erlauben diese Flächenheizelemente 14 eine einfache Konfiguration hinsichtlich Anzahl und Lage der Heizzonen 14a, 14b, die getrennt ansteuerbar sind. Dadurch kann sich die beheizte Fläche dem Baufortschritt folgend nach unten vergrößern, so dass nur die momentan notwendigen Bereiche beheizt werden, die tatsächlich mit Pulver befüllt sind. Dadurch wird einerseits möglichst wenig Wärme nach außen abgegeben, und andererseits wird einem Bauteilverzug des dreidimensionalen Körpers vorgebeugt.

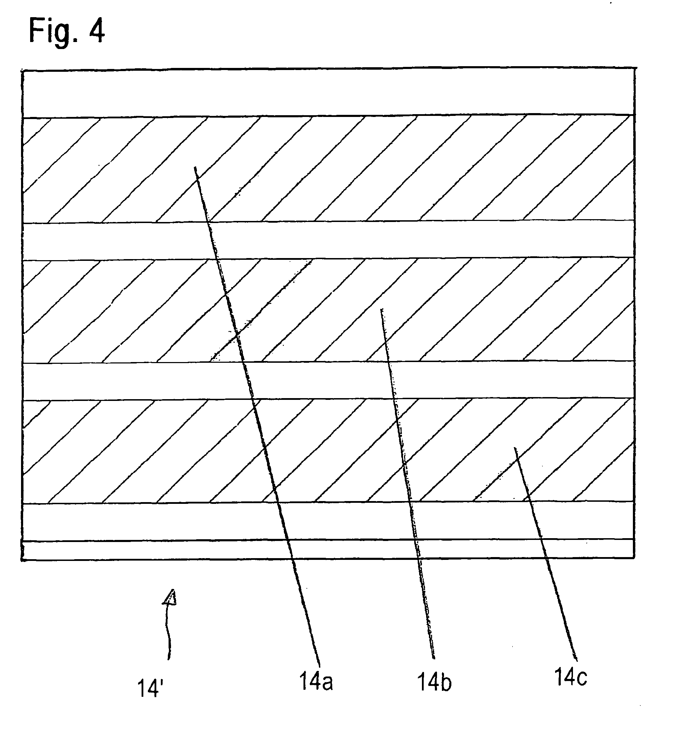

Die Fig. 4 zeigt eine schematische, vertikale Schnittansicht eines Flächenheizelementes 14' eines anderen Ausführungsbeispiels. Das Flächenheizelement 14' ist ähnlich dem Flächenheizelement 14, außer dass das Flächenheizelement 14' drei Heizzonen 14a, 14b, 14c aufweist. Die Steuervorrichtung 11 steuert entsprechend dem Baufortschritt nur die Heizzone/Heizzonen oberhalb der Plattform 2 an, d.h. in der zeitlichen Reihenfolge 14a, 14b, 14c.

In den Flächenheizelementen 14; 14' sind Temperaturfühler integriert (nicht dargestellt). Diese sind etwa in der Mitte der entsprechenden Heizzone 14a, 14b; 14c mit der entsprechenden Glaskeramikplatte 13 in einem flächigen Kontakt. Dies ermöglicht eine prozessnahe Temperaturmessung, bei der die Temperatur des Pulverbetts sehr nahe an die Prozesstemperatur herangeführt werden kann.

Die Flächenheizelemente 14; 14' haben des Weiteren Schichtgrafitplatten 15 an ihrer dem Bauraum abgewandten Außenseite. Diese Schichtgrafitplatten 15 sind nicht unbedingt notwendig, haben aber den Vorteil einer gleichmäßigen Wärmeverteilung. Sie haben die Größe einer Heizzone 14a, 14b; 14c des entsprechenden Flächenheizelements 14; 14'. Zum Beispiel können Schichtgrafitplatten 15 der Fa. SGL Carbon AG mit der Bezeichnung Sigraflex (eingetragene Marke) verwendet werden. Die Schichtgrafitplatten 15 haben die Eigenschaft einer stark anisotroper Wärmeleitfähigkeit, d.h. die Wärmeleitfähigkeit ist in der Ebenenrichtung der Schichtgrafitplatten 15 wesentlich größer ist als senkrecht zu der Ebenenrichtung.

Der Rahmen 1 hat des Weiteren Glasfasermatten 16 an einer dem Bauraum abgewandten Außenseite der Flächenheizelemente 15. Zum Beispiel können Glasfasermatten 16 der Fa. Promat GmbH mit der Bezeichnung Promaglaf HTI 1200 (eingetragene Marke) verwendet werden. Die Glasfasermatten 16 haben die Aufgabe, die Glaskeramikplatten 13 sowie andere Plattenkomponenten des Rahmens 1 gegen später beschriebene Stützelemente 18 flächig vorzuspannen. Gleichzeitig sorgen die Glasfasermatten 16 für eine gute Wärmeisolierung nach außen und nach unten. Ein weiterer Vorteil der Glasfasermatten 16 ist ihre Elastizität bei Temperaturzyklen.

Der Rahmen 1 hat des Weiteren äußere Platten 17, die vorzugsweise aus Glaskeramik bestehen, an einer dem Bauraum abgewandten Außenseite der Glasfasermatten 16. Die äußeren Platten 17 sollen die Glasfasermatten 16 mithilfe der später beschriebene Stützelemente 18 nach innen drücken.

Der Rahmen 1 hat des Weiteren die Stützelemente 18, die vorzugsweise aus Edelstahl bestehen, die den Rahmen 1 insbesondere an dessen Kanten stützen. Insbesondere haben die Stützelemente 18 die Aufgabe, die Glaskeramikplatten 13 und die äußeren Platten 17 gegeneinander zu drücken. Dadurch werden die dazwischen befindlichen Glasfasermatten 16 komprimiert und vorgespannt. Des Weiteren sind die Stützelemente 18 jeweils an den Kanten des Rahmens 1 angeordnet und verbinden dort die einzelnen Wände des Rahmens 1. Im dargestellten Ausführungsbeispiel sind die Stützelemente 18 aus Edelstahl ausgebildet, so dass sie z.B. im Vergleich mit Aluminium eine geringere Wärmeleitfähigkeit und einen geringeren Wärmeausdehnungskoeffizienten haben. Außerdem hat Edelstahl eine bessere Korrosionsbeständigkeit als Aluminium.

Die Stützelemente 18 weisen Eckleisten 18a aus möglichst dünnwandigen Vierkant-Hohlprofilen auf. Durch die dünne Wandstärke wird die Wärmeleitfähigkeit begrenzt. Die Stützelemente 18 weisen des Weiteren Haltebleche 18c auf, die die Glaskeramikplatten 13 von innen abstützen. Die Stützelemente 18 haben des Weiteren äußere Andrückbleche 18b, die an die Hohlprofile 18a geschraubt sind und in Zusammenwirkung mit den Halteblechen 18c die Schichtkomponenten des Rahmens 1 miteinander verspannen. Die vier Wände des Rahmens 1 werden durch diese Konstruktion zusammengehalten. Die Stützelemente 18 weisen des Weiteren Abstandsstücke 18d vorzugsweise aus einem thermischen Isolationswerkstoff auf, die den Abstand zwischen den Glaskeramikplatten 13 und den äußeren Platten 17 fest vorgeben. Die Stützelemente 18 haben des Weiteren Leistenbleche 18e, die den Rahmen 1 an dessen Innenkanten abrunden. Die Leistenbleche 18e verhindern ein Eindringen von Pulver in die Fugen zwischen den verschiedenen Komponenten des Rahmens 1 und erleichtert die Reinigung des Rahmens 1. Die Stützelemente 18 sorgen für die vollständige Abstützung des Rahmens 1, so dass die relativ-spröden Glaskeramikplatten 13 keine Funktion zum Stützen des Rahmens 1 haben müssen.

Der Rahmen 1 hat des Weiteren eine Verschalung 19 an der dem Bauraum abgewandten Außenseite der äußeren Platten 17. Die Verschalung 19 bildet ein Gehäuse des Rahmens 1 und sorgt außerdem für eine weitere Wärmeisolierung nach außen.

Der so aufgebaute Rahmen 1 hat die folgenden Eigenschaften:
Der Rahmen 1 und die dazugehörige Vorrichtung sind zum Herstellen eines dreidimensionalen Objekts 3 aus einem Aufbaumaterial 3a mit einem Schmelzpunkt von mehr als 150°C und insbesondere von mehr als 180°C geeignet. Durch die verwendeten Materialien und durch die selektive Ansteuerung der erforderlichen Heizzonen 14a, 14b; 14c sind Prozesstemperaturen bis zu etwa 370 °C möglich. Wenn sich die Plattform 2 zu Baubeginn ganz oben befindet, wird nur der obere Bereich des Rahmens 1 beheizt, der tatsächlich mit Pulver befüllt ist. Dem Baufortschritt folgend werden weiter unten liegende Heizzonen zugeschaltet. Dadurch wird eine übermäßige thermische Belastung insbesondere der Hubmechanik 12 vermieden. Auch das Material der Glaskeramikplatten 13 leitet die Wärme kaum in vertikaler Richtung ab. Dies ist insbesondere bei Baubeginn vorteilhaft, da die Hubmechanik 12 thermisch nicht zu stark belastet wird. Im Ergebnis wird die Wärme möglichst wenig nach unten und nach außen abgegeben.

Bei dem dargestellten Ausführungsbeispiel ist der Rahmen als ein Schichtverbund von mehreren Komponenten beschrieben, wobei angrenzende Komponenten miteinander in Kontakt sind. Jedoch ist dieser Kontakt nicht wesentlich für die Erfindung, so dass zwischen den beschriebenen Schichtkomponenten weitere Schichten angeordnet werden können, ohne dass der in den Ansprüchen definierte Schutzumfang verlassen wird. Insbesondere der in den Ansprüche verwendete Begriff "die dem Bauraum abgewandten Außenseite" meint nicht notwendigerweise die körperliche Außenfläche der entsprechenden Schichtkomponente. Der Begriff "die dem Bauraum abgewandten Außenseite" gibt vielmehr eine Orientierung der Schichtanordnung ausgehend vom Bauraum zur Außenseite hin an.

Der Schutzumfang beschränkt sich nicht auf das dargestellte Ausführungsbeispiel, sondern er umfasst weitere Änderungen und Abwandlungen, sofern diese innerhalb des durch die beigefügten Ansprüche definierten Umfangs fallen.

Beispielsweise sind der erfindungsgemäße Wechselrahmen und die Vorrichtung zum Herstellen eines dreidimensionalen Objekts nicht auf eine Lasersintervorrichtung beschränkt. Der Wechselrahmen eignet sich auch für die Verwendung in einer Stereolithografievorrichtung, bei der statt eines Pulvers ein fotohärtbares Harz als Aufbaumaterial verwendet wird, oder für eine Elektronenstrahlsinter- oder schmelzvorrichtung, bei der statt eines Lasers ein Elektronenstrahl verwendet wird. Auch eine Anwendung beim dreidimensionalen Drucken oder beim FDM (Fused Deposition Molding) ist denkbar.

## Patentansprüche

1. Wechselrahmen für eine Vorrichtung zum Herstellen eines dreidimensionalen Objekts (3), wobei der Wechselrahmen einen Rahmen (1) und eine in dem Rahmen (1) befindliche, vertikal verfahrbare Plattform (2) aufweist, wobei der Rahmen (1) und die Plattform (2) in ihrem Inneren einen Bauraum definieren und der Wechselrahmen in die Vorrichtung eingebaut und aus dieser entnommen werden kann, wobei die Vorrichtung das dreidimensionale Objekt (3) durch schichtweises Verfestigen eines pulverförmigen oder flüssigen Aufbaumaterials (3a) an den dem Querschnitt des herzustellenden Objekts (3) in der jeweiligen Schicht entsprechenden Stellen in dem Bauraum herstellt,
**dadurch gekennzeichnet, dass**
der Rahmen (1) an seiner dem Bauraum zugewandten Innenseite Glaskeramikplatten (13) aufweist.

2. Wechselrahmen gemäß Anspruch 1, des Weiteren mit
Flächenheizelementen (14; 14') an einer dem Bauraum abgewandten Außenseite der Glaskeramikplatten (13).

3. Wechselrahmen gemäß Anspruch 2, wobei die Flächenheizelemente (14; 14') mehrere vertikal übereinander angeordnete Heizzonen (14a, 14b; 14c) definieren, die individuell ansteuerbar sind.

4. Wechselrahmen gemäß einem der Ansprüche 1 bis 3, wobei
die Flächenheizelemente (14; 14') an ihrer dem Bauraum abgewandten Außenseite Schichtgrafitplatten (15) aufweisen.

5. Wechselrahmen gemäß einem der Ansprüche 1 bis 4, des Weiteren mit
Glasfasermatten (16), die an einer dem Bauraum abgewandten Außenseite der Flächenheizelemente (14; 14') angeordnet sind.

6. Wechselrahmen gemäß Anspruch 5, des Weiteren mit
äußeren Platten (17), vorzugsweise aus Glaskeramik, an einer dem Bauraum abgewandten Außenseite der Glasfasermatten (16).

7. Wechselrahmen gemäß einem der vorherigen Ansprüche, des Weiteren mit
Stützelementen (18), vorzugsweise aus Edelstahl, die die Bestandteile des Rahmens (1) insbesondere an dessen Kanten stützen.

8. Vorrichtung zum Herstellen eines dreidimensionalen Objekts (3) mit einem Wechselrahmen gemäß einem der vorherigen Ansprüche, wobei die Vorrichtung das dreidimensionale Objekt (3) durch schichtweises Verfestigen eines pulverförmigen oder flüssigen Aufbaumaterials (3a) an den dem Querschnitt des herzustellenden Objekts (3) in der jeweiligen Schicht entsprechenden Stellen in einem Bauraum herstellt, der durch den Rahmen (1) und die Plattform (2) definiert ist.

9. Vorrichtung gemäß Anspruch 8, wobei die Vorrichtung eine Verfestigungseinrichtung in Gestalt eines Lasers (7) oder einer anderen Energiequelle aufweist.

10. Vorrichtung gemäß Anspruch 8 oder 9, die zum Herstellen eines dreidimensionalen Objekts (3) aus einem Aufbaumaterial (3a) mit einem Schmelzpunkt von mehr als 180°C geeignet ist.

11. Vorrichtung gemäß einem der Ansprüche 8 bis 10,
des Weiteren mit einer Steuervorrichtung (11), die entsprechend dem Baufortschritt nur die Heizzone/Heizzonen oberhalb der Plattform (2) ansteuert.

## Claims

1. Replaceable frame of a device for manufacturing a three-dimensional object (3), wherein the replaceable frame has a frame (1) and a platform (2) which is arranged in the frame (1) and vertically movable, wherein the frame (1) and the platform (2) define a building space in the interior thereof and the replaceable frame can be inserted in the device and removed therefrom, wherein the device manufactures the three-dimensional object (3) by solidifying a powder or liquid building material (3a) layer by layer at locations in each layer corresponding to the cross-section of the object (3) to be manufactured in the building space, **characterized in that**, at the inner side facing the building space, the frame (1) comprises glass ceramic plates (13).

2. Replaceable frame according to claim 1, further comprising
surface heating elements (14; 14') at an outer side of the glass ceramic plates (13) averted from the building space.

3. Replaceable frame according to claim 2, wherein the surface heating elements (14; 14') define a plurality of heating zones (14a, 14b; 14c) which are vertically arranged above each other and individually controllable.

4. Replaceable frame according to any one of claims 1 to 3, wherein
the surface heating elements (14; 14') comprise graphite layer plates (15) at the outer side thereof averted from the building space.

5. Replaceable frame according to any one of claims 1 to 4, further comprising
fibre glass mats (16) arranged at an outer side of the surface heating elements (14; 14') averted from the building space.

6. Replaceable frame according to claim 5, further comprising
outer plates (17), preferably made of glass ceramic, at an outer side of the fibre glass mats (16) averted from the building space.

7. Replaceable frame according to any one of the previous claims, further comprising
support elements (18), preferably made of stainless steel, supporting the components of the frame (1), in particular at the edges thereof.

8. Device for manufacturing a three-dimensional object (3) comprising a replaceable frame according to any one of the previous claims, wherein the device manufactures the three-dimensional object (3) by solidifying a powder or liquid building material (3a) layer by layer at locations in each layer corresponding to the cross-section of the object (3) to be manufactured in a building space defined by the frame (1) and the platform (2).

9. Device according to claim 8, wherein the device comprises solidifying means in the shape of a laser (7) or another energy source.

10. Device according to claim 8 or 9, being suitable for manufacturing a three-dimensional object (3) of a building material (3a) having a melting point of more than 180°C.

11. Device according to any one of claims 8 to 10, further comprising a control device (11) for controlling only the heating zone/zones which are, according to the building progress, above the platform (2) .

## Revendications

1. Structure interchangeable destinée à un dispositif de fabrication d'un objet tridimensionnel (3), dans laquelle la structure interchangeable présente un cadre (1) et une plate-forme (2) déplaçable verticalement se trouvant dans le cadre (1), dans laquelle le cadre (1) et la plate-forme (2) définissent en leur intérieur un espace de construction et la structure interchangeable est incorporée dans le dispositif et peut être extraite hors de celui-ci, dans laquelle le dispositif fabrique l'objet tridimensionnel (3) dans l'espace de construction en consolidant couche par couche un matériau de construction pulvérulent ou liquide (3a) aux endroits correspondants à la section transversale de l'objet à fabriquer (3) dans la couche respective, **caractérisée en ce que** le cadre (1) présente des plaques de vitrocéramique (13) sur sa face intérieure tournée vers l'espace de construction.

2. Structure interchangeable selon la revendication 1, comportant en outre des éléments chauffants plats (14; 14') sur une face extérieure des plaques de vitrocéramique (13) située à l'opposé de l'espace de construction.

3. Structure interchangeable selon la revendication 2, dans laquelle les éléments chauffants plats (14; 14') définissent plusieurs zones de chauffage (14a, 14b; 14c) disposées verticalement l'une au-dessus de l'autre, qui peuvent être commandées individuellement.

4. Structure interchangeable selon l'une quelconque des revendications 1 à 3, dans laquelle les éléments chauffants plats (14; 14') présentent des plaques de graphite stratifiées (15) sur leur face extérieure située à l'opposé de l'espace de construction.

5. Structure interchangeable selon l'une quelconque des revendications 1 à 4, comportant en outre des nappes de fibres de verre (16), qui sont disposées sur une face extérieure des éléments chauffants plats (14; 14') située à l'opposé de l'espace de construction.

6. Structure interchangeable selon la revendication 5, comportant en outre des plaques extérieures (17), de préférence en vitrocéramique, sur une face extérieure des nappes de fibres de verre (16) située à l'opposé de l'espace de construction.

7. Structure interchangeable selon l'une quelconque des revendications précédentes, comportant en outre des éléments de soutien (18), de préférence en acier allié, qui soutiennent les composants du cadre (1), en particulier sur les bords de celui-ci.

8. Dispositif de fabrication d'un objet tridimensionnel (3) avec une structure interchangeable selon l'une quelconque des revendications précédentes, dans lequel le dispositif fabrique l'objet tridimensionnel (3) en consolidant couche par couche un matériau de construction pulvérulent ou liquide (3a) aux endroits correspondants à la section transversale de l'objet à fabriquer (3) dans la couche respective dans un espace de construction, qui est défini par le cadre (1) et la plate-forme (2).

9. Dispositif selon la revendication 8, dans lequel le dispositif présente un dispositif de consolidation sous la forme d'un laser (7) ou d'une antre source d'énergie.

10. Dispositif selon la revendication 8 ou 9, qui est apte à fabriquer un objet tridimensionnel (3) à partir d'un matériau de construction (3a) présentant un point de fusion supérieur à 180°C.

11. Dispositif selon l'une quelconque des revendications 8 à 10, comportant en outre un dispositif de commande (11), qui commande uniquement la zone de chauffage/les zones de chauffage située(s) au-dessus de la plate-forme (2) en fonction de la progression de la construction.
